# EUROPEAN PATENT APPLICATION

(11) **EP 0 762 544 A1**
(43) Date of publication of application: **12.03.1997**
(21) Application number: 96202317.2
(22) Date of filing: 20.08.1996
(51) Int. Cl.: H01R 9/03, H01R 4/36, B60M 1/24

(54) **Branching terminal for convoluted suspension wires**

(30) Priority: 11.09.1995 FI 954240
(71) Applicant: OY SEKKO AB, 06100 Porvoo (FI)
(72) Inventor: Söderholm, Henrik, 06100 Porvoo (FI)
(74) Representative: LEITZINGER OY

(57) **Abstract**

The invention relates to a branching terminal for convoluted suspension wires, said terminal comprising a metallic body (1, 2) provided with receptacles (3) for the ends of branch wires to be coupled, clamping screws (4) for clamping the wire ends in said receptacles (3), and teeth (8) opposite to the clamping screws and penetrating the wire insulation. Two body elements (1) are connected at a distance from each other by means of a metal rod (2), the terminal being provided with more than two, for example four of said receptacles (3), whereby a single terminal can be fitted with four branch wires.

## Description

The present invention relates to a branching terminal for convoluted suspension wires, said terminal comprising a metallic body provided with receptacles for the ends of branch wires to be coupled, clamping screws for clamping the wire ends in said receptacles, and teeth opposite to the clamping screws and penetrating the wire insulation.

Installations of convoluted suspension wires often involve situations in which two or more branch wires must be coupled with a single supply wire. The current terminals are intended for two branch wires and, thus, the coupling of several branch wires is difficult to perform in terms of installation technology and ergonomy. Hence, the reliability of connections is also compromised.

An object of the invention is to provide an improved branching terminal which is capable of having more than two branches coupled to a single terminal for an ergonomically easy installation of couplings and for providing a reliable connection for each branch wire.

This object is achieved by means of the invention on the basis of characterizing features set forth in the appended claims.

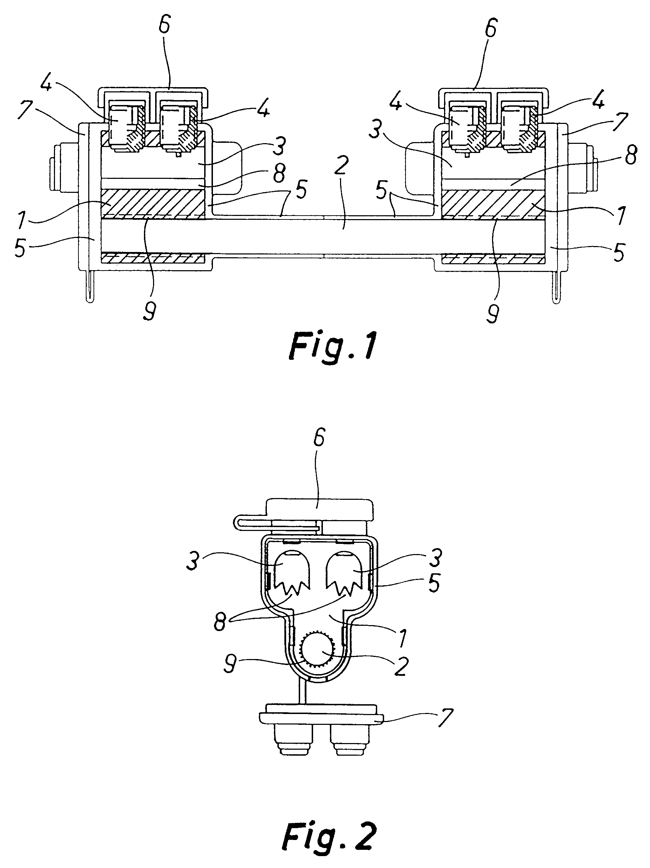

One exemplary embodiment of the invention will now be described in more detail with reference made to the accompanying drawing, in which
- fig. 1: shows a terminal of the invention in longitudinal section and
- fig. 2: shows a plan view of the terminal with the end flap open.

The terminal body consists of two metal elements 1 connected at a distance from each other by means of a metal rod 2. The ends of the metal rod 2 are inserted with a press fit in fluted holes 9 included in the body elements 1 for creating a good contact between the elements 1 and 2. Each body element 1 is provided with two receptacles 3 for the ends of branch wires to be connected. Each receptacle 3 is provided with two clamping screws 4, each individual branch wire being connectable by means of two screws 4. Since the number of receptacles 3 is four, a single terminal can be fitted with four branches.

The body elements 1 are provided with teeth 8, rising into the receptacles 3, located opposite to the clamping screws 4, and penetrating the wire insulation. In the depicted case, the teeth 8 are elongated axial ridges but other shapes are also possible. By virtue of the teeth 8, the ends of branch wires to be connected need not be stripped.

The metal elements 1, 2 are surrounded by a plastic case 5 which is provided with openable cover flaps 7 at the opposite ends of the terminal. The cover flaps 7 are further provided with short snub pipes which can be cut open for pushing the branch wires into the receptacles 3. On top of the clamping screws 4 are also openable cover flaps 6. A single flap 6 always covers four screws.

The main benefit gained by a terminal of the invention is that a single terminal can be fitted with more than two branch wires and the terminal is ergonomically easy to install. Since there are two screws intended for each branch wire, the connections will be mechanically sturdy.

## Claims

1. A branching terminal for convoluted suspension wires, said terminal comprising a metallic body (1, 2) provided with receptacles (3) for the ends of branch wires to be coupled, clamping screws (4) for clamping the wire ends in said receptacles (3), and teeth (8) opposite to the clamping screws and penetrating the wire insulation, **characterized** in that two body elements (1) are connected at a distance from each other by means of a metal rod (2), the terminal being provided with more than two of said receptacles (3).

2. A terminal as set forth in claim 1, **characterized** in that each body element (1) is provided with two receptacles (3), whereby a single terminal can be fitted with four branch wires.

3. A terminal as set forth in claim 1 or 2, **characterized** in that each receptacle (3) is provided with two screws (4) for connecting each individual branch wire.

4. A terminal as set forth in any of claims 1-3, **characterized** in that the ends of the metal rod (2) are inserted with a press fit in fluted holes (9) included in the body elements.

5. A terminal as set forth in any of claims 1-4, **characterized** in that the metal body (1, 2) is surrounded with a plastic case (5), which is provided with openable cover flaps (7) at the opposite ends of the terminal and openable cover flaps (6) on top of the clamping screws (4), such that a single flap (6) always covers four screws.
